(19) Europäisches Patentamt
European Patent Office
Office européen des brevets

(11) **EP 2 089 757 B1**

(12) **FASCICULE DE BREVET EUROPEEN**

(45) Date de publication et mention
de la délivrance du brevet:
**16.03.2016 Bulletin 2016/11**

(21) Numéro de dépôt: **07858702.9**

(22) Date de dépôt: **15.11.2007**

(51) Int Cl.:
*G02C 7/06* *(2006.01)*        *G02C 7/10* *(2006.01)*

(86) Numéro de dépôt international:
**PCT/FR2007/052346**

(87) Numéro de publication internationale:
**WO 2008/059177 (22.05.2008 Gazette 2008/21)**

(54) **LENTILLES OPHTALMIQUES MULTI-TEINTES POUR LA VISION NOCTURNE**

AUGENOPTISCHE LINSEN MIT MEHRFACH-FARBTON FÜR NACHTSICHT

MULTI-TINT OPHTHALMIC LENSES FOR NIGHT VISION

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **17.11.2006 FR 0610097**

(43) Date de publication de la demande:
**19.08.2009 Bulletin 2009/34**

(73) Titulaire: **Essilor International
(Compagnie Générale d'Optique)
94220 Charenton-le-Pont (FR)**

(72) Inventeur: **GIRAUDET, Guillaume
94220 Charenton-le-Pont (FR)**

(74) Mandataire: **Cabinet Plasseraud
66, rue de la Chaussée d'Antin
75440 Paris Cedex 09 (FR)**

(56) Documents cités:
**DE-A1- 4 327 193      DE-U1- 29 716 010
FR-A- 1 388 995      FR-A1- 2 684 771
US-A- 5 428 409      US-A1- 2004 119 940**

## Description

La présente invention se rapporte au domaine de la coloration de lentilles ophtalmiques. Plus particulièrement, l'invention concerne un nouveau design de coloration multi-teinte de lentilles ophtalmiques.

Au sens de l'invention, on entend par lentilles ophtalmiques des lentilles correctrices et non correctrices mais également des masques et autres dispositifs de vision destinés à être portés devant les yeux.

Les structures impliquées dans la vision sont bien connues : ce sont les photorécepteurs de la rétine de l'oeil, à savoir les cônes et les bâtonnets, qui sont responsables de la conversion de l'énergie lumineuse en influx nerveux. Les cônes possèdent un seuil de sensibilité à la lumière élevé, contiennent trois pigments différents (bleu, vert, rouge) et sont de ce fait sensibles aux couleurs, et permettent la distinction des détails : ils sont donc adaptés à la vision de jour. A l'inverse, les bâtonnets possèdent un seuil de détection de la lumière très bas (un photon) et sont adaptés à la vision nocturne.

Lorsque l'oeil est adapté à un environnement peu lumineux, ce sont principalement, voire uniquement, les bâtonnets qui assurent l'acquisition des informations visuelles. Cette adaptation rétinienne à l'obscurité, liée à un phénomène de régénération de la rhodopsine, est optimale en moyenne après 20-30 minutes passées dans une obscurité totale. Autant cette adaptation de la retine à l'obscurité est longue, autant sa désadaptation est immédiate : un bref éblouissement provoquera immédiatement la saturation des bâtonnets situés dans la zone éblouie, et la récupération des capacités maximales de vision de nuit de l'oeil, dans cette zone, par une lente régénération de la rhodopsine nécessitera de nouveau au moins une vingtaine de minutes.

Les bâtonnets, au nombre total d'environ 120 millions, sont situés dans la zone périphérique de la rétine entourant une zone centrale, d'environ 4 mm de diamètre, appelée macula et constituée exclusivement de cônes.

La conduite automobile est une tâche multisensorielle dans laquelle les informations captées par l'oeil sont essentielles pour générer une décision prompte et adéquate du conducteur. Dans des conditions visuelles difficiles, lors de la conduite de nuit par exemple, cette activité devient plus délicate et les risques d'accidents sont plus élevés.

Plusieurs besoins ont ainsi été identifiés par la Demanderesse pour optimiser la vision de nuit et donc améliorer le confort et la sécurité du conducteur.

En premier lieu, il est nécessaire d'obtenir une protection performante contre les éblouissements, afin de maintenir dans la mesure du possible l'adaptation rétinienne à l'obscurité. Les phénomènes d'éblouissement, fréquents lors de la conduite de nuit, liés par exemples aux phares de voitures venant en sens inverse ou se réfléchissant dans les rétroviseurs, sont dus davantage à la grande différence entre l'intensité de la lumière éblouissante et le niveau d'adaptation de l'oeil à l'obscurité plutôt qu'à la valeur intrinsèque de l'intensité de la source lumineuse. Autrement dit, les mêmes phares produisant une gêne la nuit n'auront que peu de retentissement de jour, la rétine étant déjà habituée à voir des éléments de forte luminance.

Les bâtonnets, sensibles à des longueurs d'ondes entre 450 nm et 530 nm, ne seront pratiquement pas stimulés par une source de lumière rouge ou orange (longueurs d'onde supérieures à 600 nm). La protection des yeux par un filtre rouge ou orange laissant passer presque exclusivement la lumière de longueurs d'ondes supérieures à 600 nm devrait ainsi permettre d'empêcher la dégradation de la rhodopsine et de maintenir l'adaptation de l'oeil à l'obscurité.

En deuxième lieu, il est nécessaire au conducteur de percevoir de manière détaillée et contrastée son environnement, comme par exemple la signalétique routière. De nombreux travaux ont montré que des filtres jaunes, coupant sélectivement les courtes longueurs d'ondes (c'est-à-dire la lumière bleue), améliorent la sensibilité au contraste. De tels filtres sont notamment décrits dans Wolffsohn et al., Optometry and Vision Science, volume 77(2), pages 73-81, (2000). Les travaux de Wolffsohn montrent que la coupure des courtes longueurs d'ondes par des filtres jaunes augmente la perception du contraste, notamment lorsque l'on regarde des objets lumineux sur un fond globalement bleu.

Il serait ainsi souhaitable de disposer de lunettes avec des verres fournissant à la fois une protection efficace contre l'éblouissement et la dégradation consécutive de la rhodopsine des bâtonnets, et une amélioration de la perception des contrastes grâce à la filtration de la lumière bleue de courte longueur d'onde.

Plusieurs brevets décrivent des lentilles comprenant une zone grise ou sombre sur une partie de leur surface permettant de réduire l'éblouissement engendré par les phares des voitures ou des lumières extérieure trop fortes. De telles lentilles sont décrites dans GB 277167, JP 9005681 et DE 19650122. Ces brevets répondent partiellement à un seul des besoins de la vision de nuit, la protection contre l'éblouissement : la teinte grise réduit le niveau global de transmission des rayons lumineux mais ne filtre pas spécifiquement les rayons responsables du phénomène de désadaptation des yeux, à savoir les rayons lumineux ayant des longueurs d'onde inférieures à 600 nm.

US 5,428,409 décrit des lunettes pour la conduite de nuit comprenant une zone de teinte sombre réduisant l'éblouissement et située dans le quart supérieur du verre de lunette et une zone de transmission de la lumière, optionellement de couleur jaune, couvrant le reste de la surface de la lentille.

FR2684771 propose une solution à double teinte. Une couleur « violet irisé ou dérivés » dans la partie supérieure du verre et une teinte jaune dans la partie basse du verre pour une vision claire et contrastée. L'enseignement de cet état de la technique est toutefois équivoque. En effet, ce document prétend que la zone violette dans la partie supérieure du verre laisse passer sélectivement la lumière rouge (de longueur d'onde élevée). Or, il est connu que le rayonnement violet est au contraire un rayonnement de faible longueur d'onde (environ 400 nm) à laquelle la rhodopsine des bâtonnets est très sensible. Par ailleurs, dans ce document la zone « anti-éblouissement » n'est présente que dans la moitié supérieure de la lentille et ne peut donc protéger l'ensemble des bâtonnets répartis sur l'ensemble de la zone périphérique de la rétine. D'autre part, la teinte jaune est limitée à la partie basse du verre et ne permet donc pas d'améliorer la sensibilité au contraste pour la perception d'éléments situés en vision de loin droit devant le conducteur, tels que des panneaux directionnels ou des obstacles à éviter sur la chaussée, ou seulement au prix d'une modification importante et inconfortable du port de tête.

Aucun des documents de l'art antérieur, à la connaissance de la Demanderesse, ne décrit donc des lentilles ophtalmiques parfaitement adaptées à la vision nocturne, c'est-à-dire des verres permettant à la fois de protéger les bâtonnets situés en périphérie de la rétine contre l'exposition à des longueurs d'ondes inférieures à environ 600 nm et d'améliorer la perception des contrastes dans la zone du verre parcourue par le regard et traversée par les rayons lumineux qui parviennent au niveau de la macula riche en cônes.

Ainsi, la présente invention propose de répondre à un double problème technique posé par la vision nocturne: obtenir une protection performante contre les éblouissements et améliorer la perception des contrastes.

Ce double problème a été résolu selon la présente invention grâce à des lentilles comportant à la fois une zone de couleur jaune, correspondant essentiellement à la zone du verre explorée par le regard de l'utilisateur, et une zone de couleur rouge ou orange entourant la zone jaune, c'est-à-dire située à la périphérie de la lentille et qui n'est généralement pas parcourue par le regard de l'utilisateur. Tandis que la couleur jaune dans la zone de vision centrale de la lentille joue le rôle bien connu d'amélioration de la sensibilité au contraste, la couleur rouge ou orange en dehors de la zone de vision centrale filtre les rayons de faibles longueurs d'ondes, inférieurs à 600nm, et empêche ainsi la désactivation de la rhodopsine des bâtonnets et la désadaptation de l'oeil à l'obscurité.

La présente invention a par conséquent pour objet une lentille ophtalmique, telle que définie dans la revendication 1 et 4, qui comprend, à sa surface,

• une zone centrale de couleur jaune, absorbant préférentiellement la lumière bleue du spectre visible, et

• une zone périphérique de couleur rouge ou orange, absorbant préférentiellement les longueurs d'ondes inférieures à 600nm du spectre visible.

L'adjectif « central » utilisé pour décrire la zone de couleur jaune ne signifie pas que cette zone occupe une position correspondant au centre géométrique de la lentille ophtalmique selon l'invention. Il exprime simplement le fait que cette zone de la lentille n'est pas en contact avec la périphérie de la lentille ophtalmique mais est cirsconscrite par la zone périphérique de couleur rouge ou orange. Lorsque la lentille ophtalmique comporte un ou plusieurs centres optiques, la zone centrale de couleur jaune est généralement centrée autour de ce centre optique ou de chacun de ces centres optiques.

Par « lentilles ophtalmiques » on entend les lentilles non correctrices afocales, mais aussi les lentilles correctrices monofocales et les lentilles progressives.

Dans un mode de réalisation la lentille ophtalmique est une lentille ophtalmique afocale. Dans ce mode de réalisation, et pour ce type de lentille non correctrice, la zone centrale de couleur jaune a de préférence une forme circulaire ou ovale.

Dans un autre mode de réalisation, la lentille ophtalmique est une lentille ophtalmique correctrice monofocale. Dans ce type de lentille, la zone centrale de couleur jaune, de préférence circulaire ou ovale, est généralement centrée sur le centre optique de la lentille.

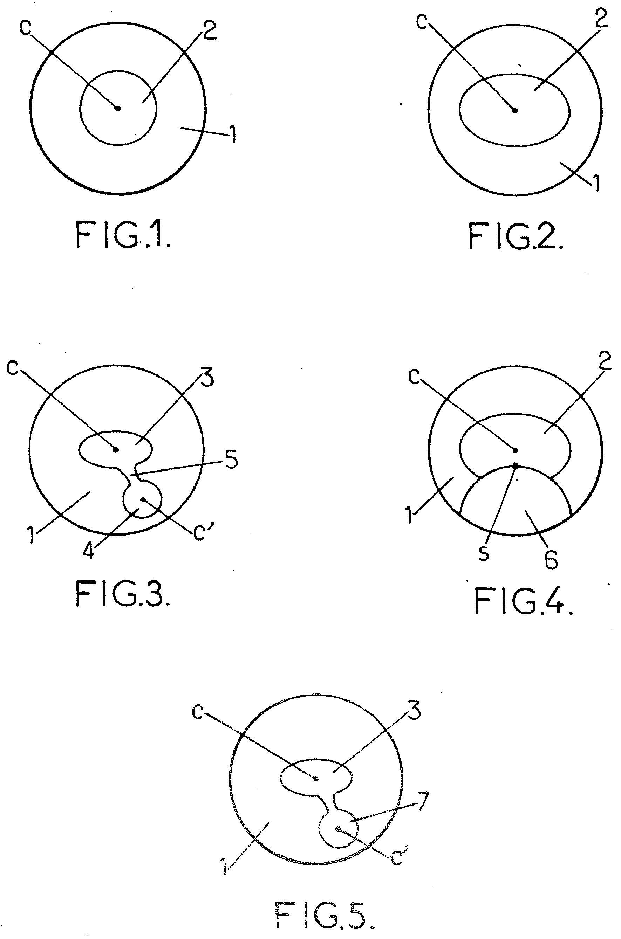

Les figures 1 et 2 représentent de telles lentilles monofocales comportant une zone périphérique rouge ou orange **1** entourant une zone centrale **2** de couleur jaune de forme circulaire ou ovale, centrée autour du centre optique **C** de la lentille.

Avantageusement, le diamètre de la zone circulaire de couleur jaune, ou la dimension la plus importante de la zone ovale de couleur jaune, est compris(e) entre 5 et 35 mm, de préférence entre 10 et 25 mm, et est en particulier proche de 20 mm.

La présente invention s'applique à d'autres types de lentilles, c'est à dire les lentilles progressives. Ce type de lentille est remarquable en ce qu'elle possède deux centres optiques, c'est-à-dire un centre optique de vision de loin et un centre optique de vision de près, reliés par un couloir de progression qui permet à l'oeil de passer d'une vision de loin à une vision de près en douceur, procurant ainsi un véritable confort visuel au porteur.

Un mode de réalisation particulier de l'invention a donc pour objet une lentille ophtalmique correctrice progressive avec un centre optique de vision de loin et un centre optique de vision de près. Dans le cas d'une telle lentille représentée à la figure 3, la zone centrale de couleur jaune comporte une première zone **3**, de préférence de forme circulaire ou ovale, recouvrant essentiellement la zone autour du centre optique de vision de loin **C**, et une deuxième zone **4**, de préférence de forme circulaire ou ovale, recouvrant la zone autour du centre optique de vision de près **C'**, ainsi qu'une bande **5** reliant ces deux zones et correspondant au chemin suivi par l'oeil lorsqu'il passe de l'un à l'autre. Cette bande correspond, en d'autres termes, au « couloir de progression » précité. Le reste de la surface de la lentille est couverte par la zone rouge ou orange **1**.

Dans le cas d'une lentille ophtalmique correctrice progressive, le diamètre ou la dimension la plus importante de la zone de couleur jaune recouvrant le centre optique de vision de loin est de préférence comprise entre 5 et 35 mm, en particulier enre 10 et 25 mm, et est de manière encore plus préférentielle proche de 20 mm.

La zone jaune recouvrant le centre optique de vision de près est généralement plus petite que celle correspondant au centre optique de vision de loin. Le diamètre ou la dimension la plus importante de la zone de couleur jaune recouvrant le centre optique de vision de près est avantageusement compris (e) entre 5 et 15 mm, de préférence entre 7 et 13 mm, et est en particulier proche de 10 mm. La largeur de la bande reliant ces deux zones est avantageusement comprise entre 3 et 7 mm, de préférence entre 4 et 6 mm, et est en particulier proche de 5 mm.

Les dimensions de la zone centrale de couleur jaune indiquées ci-dessus correspondent aux fourchettes appropriées pour la plupart des porteurs de lunettes, mais ne tiennent pas compte des différences individuelles. Or, on comprendra aisément qu'il est avantageux de limiter le plus possible la dimension de la zone centrale de couleur jaune à celle de la zone réellement explorée par l'oeil humain afin de maximiser l'étendue de la zone rouge ou orange assurant la protection contre l'éblouissement des zones périphériques de la rétine. Une telle optimisation des dimensions relatives des zones jaune et rouge ou orange peut être effectuée par exemple grâce à la technologie *Vision Print System* (VPS) développée par la Demanderesse dans le contexte d'autres recherches concernant le comportement visuel. Il s'agit d'un appareil permettant de décrire les différences interindividuelles de stratégie de coordination des yeux et de la tête dans l'exploration visuelle de l'environnement, appelé aussi « comportement oeil-tête ». Ainsi peuvent être définis, d'un côté, des individus plutôt « bougeurs de tête » (en anglais *head mover*) ayant tendance à suivre visuellement un objet par un mouvement de la tête plutôt que par un mouvement de l'oeil, et, de l'autre côté, des individus plutôt « bougeurs d'oeil » (en anglais *eye mover*) ayant tendance a suivre visuellement un objet avec les yeux plutôt qu'avec la tête.

La détermination du comportement oeil-tête d'un porteur de lunettes, permet ainsi d'optimiser la taille de la zone centrale de couleur jaune. Si le porteur à tendance à tourner sa tête plutôt que ses yeux pour suivre du regard un objet, un filtre jaune de 5 à 20 mm, est généralement suffisant pour couvrir toute la zone de vision du verre. Inversement, si le porteur à tendance à bouger ses yeux plutôt que sa tête pour suivre du regard un objet, alors un filtre jaune couvrant une zone relativement large de la lentille est nécessaire, par exemple une zone ayant un diamètre compris entre 20 et 35 mm.

La zone rouge ou orange périphérique n'est pas forcément adjacente à la zone de couleur jaune et peut en principe être séparée de celle-ci par une bande incolore. Toutefois, dans le but d'accroître le plus possible l'efficacité de protection contre l'éblouissement, la zone périphérique de couleur rouge ou orange de la lentille ophtalmique de l'invention couvre de préférence toute la surface non recouverte par la zone centrale de couleur jaune.

Un mode de réalisation particulier des lentilles ophtalmiques multi-teintes permet de résoudre un problème technique supplémentaire non encore abordé jusqu'ici.

En effet, la conduite nocturne nécessite généralement l'accès à une quantité d'informations affichées dans l'habitacle de la voiture, relatives aux paramètres de conduite (vitesse, compte-tours, etc.), de navigation (écran d'un système GPS par exemple) ainsi que d'autres afficheurs non liés spécifiquement à la conduite (heure, autoradio, etc.). Ces différents éléments ont des couleurs d'affichage variables d'un habitacle à l'autre et peuvent être monochromatiques ou polychromatiques. Disposer un filtre jaune sur la surface d'une lentille peut engendrer un problème général de perception des couleurs (De Fez et al., Optometry and Vision Science, volume 79(9), pages 590-7, (2002)) et en particulier des afficheurs présents dans l'habitacle d'un véhicule.

Préconiser un verre teinté pourrait ainsi s'avérer néfaste pour la qualité de visualisation de certains afficheurs, si la lumière qu'ils émettent entre en partie ou totalement dans le spectre d'absorption du verre. Par exemple, la route à suivre affichée en jaune sur l'écran d'un système de GPS ne serait plus visible avec un filtre jaune. Il serait donc préférable de ne prévoir aucune teinte particulière ou une teinte neutre dans la partie du verre utilisée pour observer les différents afficheurs de la voiture.

Pour résoudre ce problème supplémentaire que pose la perception d'afficheurs à dominante jaune dans l'habitacle du véhicule, les lentilles ophtalmiques comportent une zone non teintée ou une zone à teinte neutre, par exemple de couleur marron ou grise. Cette zone incolore ou de couleur neutre ne doit de toute évidence pas se trouver dans la zone de la lentille explorée par l'oeil lorsque le porteur de lunettes regarde au loin, à l'extérieur du véhicule, mais au contraire dans la zone explorée par le regard du conducteur lorsqu'il est en vision de près. Par conséquent, dans un mode de réalisation des lentilles ophtalmiques au moins dans une partie de la zone explorée par l'oeil de l'utilisateur en vision de près, la couleur jaune et/ou rouge ou orange est absente ou remplacée par une couleur grise ou marron.

L'emplacement de cette zone incolore ou de couleur neutre varie bien entendu en fonction du type de lentille, c'est-à-dire en fonction de la présence, du nombre et de l'emplacement d'éventuels centres optiques.

Ainsi, lorsque la lentille ophtalmique est une lentille afocale ou une lentille correctrice monofocale, la zone sans teinte ou la zone de couleur grise ou marron est située globalement dans la moitié inférieure de la lentille. Cette zone incolore ou de couleur neutre peut s'étendre jusqu'au bord du verre ou bien une mince zone de couleur rouge ou orange peut persister au niveau du bord inférieur d'une telle lentille. La zone incolore ou de couleur neutre, située dans la moitiée inférieure de la lentille, a de préférence une forme telle qu'elle est délimitée vers le haut par une parabole inversée.

Cette parabole inversée est de préférence une parabole correspondant à l'équation suivante :

$$(1) \qquad y = -ax^2 - b,$$

où la valeur de *a* est comprise entre 0,01 et 0,03, de préférence entre 0,015 et 0,025, et *b* (= valeur de l'ordonnée à l'origine) est compris entre 5 et 10 mm. L'origine du repère cartésien dans lequel est inscrite la parabole inversée définie par l'équation (1) se superpose au centre optique de la lentille lorsqu'il s'agit d'une lentille monofocale, ou au centre géométrique lorsqu'il s'agit d'une lentille afocale.

La figure 4 illustre une telle zone incolore dans la partie inférieure d'une lentille, dont le contour a une forme de parabole inversée. La lentille est une lentille monofocale avec un centre optique C situé dans une zone centrale jaune **2**, entourée d'une zone périphérique rouge ou orange **1**, adjacente à la zone jaune, et une zone incolore **6** s'étendant jusqu'au bord inférieur de la lentille. La distance entre le sommet **S** de la parabole et le centre optique **C** correspond à la valeur de l'ordonnée à l'origine *b* de l'équation (1) ci-dessus.

Lorsque la lentille selon l'invention est une lentille progressive avec un centre optique de vision de loin et un centre de vision de près, la zone sans teinte ou de couleur grise ou marron recouvre de préférence essentiellement la zone autour du centre optique de vision de près. Ce mode de réalisation est illustré sur la figure 5 qui montre une lentille ophtalmique avec une zone ovale de couleur jaune **3** correspondant à la zone centrée autour du centre optique **C** de vision de loin, une zone circulaire incolore **7** centrée autour du centre optique **C'** de vision de près, et une zone de couleur rouge ou orange **1** couvrant le reste de la surface de la lentille.

L'application des colorations jaune, rouge ou orange et optionellement grise ou marron sur des supports appropriés en matière minérale ou organique en vue de la fabrication d'une lentille ophtalmique selon l'invention peut se faire par exemple par sublimation et/ou par impression par jet d'encre. Ces techniques sont décrites par exemple dans les demandes de brevet WO 2006/079564 et FR 2 881 230 au nom de la Demanderesse. On peut également envisager l'application sur un substrat d'un film pixellisé combinée à une technologie d'impression par jet d'encre tel que décrit dans la demande de brevet WO 2006/013250.

La présente invention sera mieux comprise à la lecture des exemples suivants qui illustrent de façon non limitative l'objet de l'invention.

Exemple 1 : Coloration de lentilles ophtalmiques selon l'invention par impression par jet d'encre

On mélange sous agitation magnétique 40 % en poids de polyuréthanne anionique (W234 commercialisé par la société Baxenden) avec 60 % en poids de silice colloïdale (Ludox TM40 commercialisé par la société Aldrich). Après une heure d'agitation, on dépose le mélange obtenu par centrifugation (*spin coating*) sur un substrat biplan Orma™ (500 tours/20 secondes). Le dépôt est séché pendant 1h à 100°C à l'étuve. L'épaisseur du primaire ainsi obtenu est de 3.6 $\mu$m. Après séchage, la lentille optique comprenant le primaire et le substrat peut être imprimée avec une imprimante Canon i865. Les zones jaune, rouge ou orange et optionnellement grise sont dessinées à l'aide du logiciel Powerpoint™. La lentille ophtalmique est introduite dans le module de chargement de l'imprimante, celle-ci étant reliée à l'ordinateur comprenant le fichier "zones de couleurs" sous Powerpoint™. L'impression est réalisée. Lorsque la lentille sort de l'imprimante, elle est immédiatement séchée 1h à 100°C. On obtient une lentille ophtalmique avec les filtres de couleurs désirés.

## Revendications

1. Lentille ophtalmique, comprenant à sa surface,

   • une zone centrale de couleur jaune (2) absorbant la lumière bleue du spectre visible, et
   • une zone périphérique de couleur rouge ou orange (1), entourant la zone jaune (2), absorbant la lumière aux longueurs d'ondes inférieures à 600 nm

   et **caractérisée par le fait qu'**il s'agit d'une lentille ophtalmique correctrice progressive avec un centre optique de vision de loin (C) et un centre optique de vision de près (C'), et que la zone centrale de couleur jaune recouvre essentiellement la zone autour du centre optique de vision de loin (3) et la zone autour du centre optique de vision de près (4), ainsi qu'une bande (5) reliant ces deux zones et correspondant au chemin suivi par l'oeil lorsqu'il passe de l'une à l'autre.

2. Lentille ophtalmique selon la revendication 1, **caractérisée par le fait que** le diamètre ou la dimension la plus importante de la zone de couleur jaune recouvrant le centre optique de vision de loin est compris entre 5 et 35 mm, de préférence entre 10 et 25 mm, et est en particulier proche de 20 mm, le diamètre ou la dimension la plus importante de la zone de couleur jaune recouvrant le centre optique de vision de près est compris entre 5 et 15 mm, de préférence entre 7 et 13 mm, et est en particulier proche de 10 mm, et la largeur de la bande reliant ces deux zones est comprise entre 3 et 7 mm, de préférence entre 4 et 6 mm, et est en particulier proche de 5 mm.

3. Lentille ophtalmique selon l'une quelconque des revendications précédentes, **caractérisée par le fait que** la zone périphérique de couleur rouge ou orange couvre toute la surface de ladite lentille ophtalmique non recouverte par la zone de couleur jaune.

4. Lentille ophtalmique, comprenant à sa surface,

   • une zone centrale de couleur jaune absorbant la lumière bleue du spectre visible, et
   • une zone périphérique de couleur rouge ou orange (1), entourant la zone jaune, absorbant la lumière aux longueurs d'ondes inférieures à 600 nm

   et **caractérisée par le fait qu'**il s'agit d'une lentille ophtalmique correctrice progressive avec un centre optique de vision de loin (C) et un centre optique de vision de près (C'), et que la zone centrale de couleur jaune recouvre essentiellement la zone autour du centre optique de vision de loin (3) et la zone autour du centre optique de vision de près (7), ainsi qu'une bande (5) reliant ces deux zones et correspondant au chemin suivi par l'oeil lorsqu'il passe de l'une à l'autre, et

   • dans une partie de la zone explorée par l'oeil en vision de près, la couleur jaune et/ou rouge ou orange est absente ou remplacée par une couleur grise ou marron.

5. Lentille ophtalmique selon la revendication 4, **caractérisée par le fait que** la zone sans teinte ou de couleur grise ou marron recouvre essentiellement la zone (7) autour du centre optique de vision de près.

**Patentansprüche**

1. Ophthalmische Linse, die an ihrer Oberfläche enthält

   • eine zentrale Zone gelber Farbe (2), die das blaue Licht des sichtbaren Spektrums absorbiert, und
   • eine die gelbe Zone (2) umgebende Umfangszone roter oder oranger Farbe (1), die das Licht auf den Wellenlängen von weniger als 600 nm absorbiert,

   und **dadurch gekennzeichnet, dass** es sich um eine ophthalmische Gleitsicht-Korrekturlinse mit einem Fernsicht-Brennpunkt (C) und einem Nahsicht-Brennpunkt (C') handelt, und dass die zentrale Zone gelber Farbe hauptsächlich die Zone um den Fernsicht-Brennpunkt (3) und die Zone um den Nahsicht-Brennpunkt (4) sowie ein Band (5) bedeckt, das diese zwei Zonen verbindet und dem vom Auge verfolgten Weg entspricht, wenn es von einer Zone zur anderen geht.

2. Ophthalmische Linse nach Anspruch 1, **dadurch gekennzeichnet, dass** der Durchmesser oder die größte Abmessung der den Fernsicht-Brennpunkt bedeckenden Zone gelber Farbe zwischen 5 und 35 mm, vorzugsweise zwischen 10 und 25 mm liegt, und insbesondere nahe 20 mm ist, wobei der Durchmesser oder die größte Abmessung der den Nahsicht-Brennpunkt bedeckenden Zone gelber Farbe zwischen 5 und 15 mm, vorzugsweise zwischen 7 und 13 mm liegt, und insbesondere nahe 10 mm ist, und die Breite des diese zwei Zonen verbindenden Bands zwischen 3 und 7 mm, vorzugsweise zwischen 4 und 6 mm liegt, und insbesondere nahe 5 mm ist.

3. Ophthalmische Linse nach einem der vorhergehenden Ansprüche, **dadurch gekennzeichnet, dass** die Umfangszone roter oder oranger Farbe die ganze Fläche der ophthalmischen Linse bedeckt, die nicht von der Zone gelber Farbe bedeckt ist.

4. Ophthalmische Linse, die an ihrer Oberfläche enthält

   • eine zentrale Zone gelber Farbe, die das blaue Licht des sichtbaren Spektrums absorbiert, und
   • eine die gelbe Zone umgebende Umfangszone roter oder oranger Farbe (1), die das Licht auf den Wellenlängen von weniger als 600 nm absorbiert,

   und **dadurch gekennzeichnet, dass** es sich um eine ophthalmische Gleitsicht-Korrekturlinse mit einem Fernsicht-Brennpunkt (C) und einem Nahsicht-Brennpunkt (C') handelt, und dass die zentrale Zone gelber Farbe hauptsächlich die Zone um den Fernsicht-Brennpunkt (3) und die Zone um den Nahsicht-Brennpunkt (7) sowie ein Band (5) bedeckt, das diese zwei Zonen verbindet und dem vom Auge verfolgten Weg entspricht, wenn es von einer Zone zur anderen geht, und

   • in einem Teil der vom Auge in der Nahsicht erforschten Zone die gelbe und/oder rote oder orange Farbe abwesend oder durch eine graue oder braune Farbe ersetzt ist.

5. Ophthalmische Linse nach Anspruch 4, **dadurch gekennzeichnet, dass** die Zone ohne Färbung oder von grauer oder brauner Farbe hauptsächlich die Zone (7) um den Nahsicht-Brennpunkt bedeckt.

**Claims**

1. Ophthalmic lens, comprising on its surface:

    • a central zone (2) of yellow colour absorbing the blue light of the visible spectrum; and
    • a peripheral zone of red or orange colour (1), surrounding the yellow zone (2), absorbing light at wavelengths shorter than 600 nm;

    and **characterized in that** it is a progressive corrective ophthalmic lens with a far-vision optical centre (C) and a near-vision optical centre (C'), and **in that** the central zone of yellow colour essentially covers the zone around the far-vision optical centre (3), and the zone around the near-vision optical centre (4), and a strip (5) connecting these two zones and corresponding to the path followed by the eye when it passes from one to the other.

2. Ophthalmic lens according to Claim 1, **characterised in that** the diameter or the largest dimension of the zone of yellow colour covering the far-vision optical centre is comprised between 5 and 35 mm, preferably between 10 and 25 mm, and is in particular close to 20 mm, the diameter or the largest dimension of the zone of yellow colour covering the near-vision optical centre is comprised between 5 and 15 mm, preferably between 7 and 13 mm, and is in particular close to 10 mm, and the width of the strip connecting these two zones is comprised between 3 and 7 mm, preferably between 4 and 6 mm, and is in particular close to 5 mm.

3. Ophthalmic lens according to any one of the preceding claims, **characterised in that** the peripheral zone of red or orange colour covers all the surface of said ophthalmic lens not covered by the zone of yellow colour.

4. Ophthalmic lens, comprising on its surface:

    • a central zone of yellow colour absorbing the blue light of the visible spectrum; and
    • a peripheral zone of red or orange colour (1), surrounding the yellow zone, absorbing light at wavelengths shorter than 600 nm;

    and **characterised in that** it is a progressive corrective ophthalmic lens with a far-vision optical centre (C) and a near-vision optical centre (C'), and **in that** the central zone of yellow colour essentially covers the zone around the far-vision optical centre (3), and the zone around the near-vision optical centre (7), and a strip (5) connecting these two zones and corresponding to the path followed by the eye when it passes from one to the other; and

    • in one portion of the zone explored by the eye for near vision, the yellow and/or red or orange colour is absent or replaced by a grey or brown colour.

5. Ophthalmic lens according to Claim 4, **characterised in that** the zone that is untinted or grey or brown in colour essentially covers the zone (7) around the near-vision optical centre.

FIG.1.

FIG.2.

FIG.3.

FIG.4.

FIG.5.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 277167 A
- JP 9005681 B
- DE 19650122
- US 5428409 A
- FR 2684771
- WO 2006079564 A
- FR 2881230
- WO 2006013250 A

**Littérature non-brevet citée dans la description**

- **WOLFFSOHN et al.** *Optometry and Vision Science,* 2000, vol. 77 (2), 73-81
- **DE FEZ et al.** *Optometry and Vision Science,* 2002, vol. 79 (9), 590-7